# EUROPÄISCHE PATENTANMELDUNG

(11) **EP 3 936 949 A1**
(43) Veröffentlichungstag der Anmeldung: **12.01.2022**
(21) Anmeldenummer: 20185017.9
(22) Anmeldetag: 09.07.2020
(51) Int. Cl.: G05B 19/042

(54) **VERFAHREN ZUM BETREIBEN EINES REDUNDANTEN AUTOMATISIERUNGSSYSTEMS UND REDUNDANTES AUTOMATISIERUNGSSYSTEM**

(71) Anmelder: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(57) **Zusammenfassung**

Um ein Verfahren zum Betreiben eines redundanten Automatisierungssystems (100) zur Steuerung eines technischen Prozesses wird vorgeschlagen, mit drei Teilsystemen ein zwei aus drei Systemen zu betreiben, wobei
- in jedem Teilsystem (1,2,3) ein Vergleichsmittel (V1,V2,V3) zyklisch betrieben, welches die ersten, zweiten und dritten Ausgangsdaten (A1,A2,A3) miteinander vergleicht und die jeweiligen Vergleichsmittel (V1,V2,V3) derart betrieben werden, dass
- bei jedem Vergleich, bei dem als Ergebnis alle Ausgangsdaten (A1, A2, A3) annährend gleich sind, keine weitere Aktion durchgeführt wird, und
- bei einem Vergleich, bei dem Abweichungen zwischen den Ausgangsdaten festgestellt werden, dasjenige Teilsystem (1,2,3) mittels einer Mehrheitsentscheidung (ME) als gestört erkannt wird, bei dem die Abweichungen der eigenen Ausgangsdaten (A1,A2,A3) zu den anderen Ausgangsdaten (A1,A2,A3) am größten ist.

## Beschreibung

Die Erfindung betrifft ein Verfahren zum Betreiben eines redundanten Automatisierungssystems zur Steuerung eines technischen Prozesses, wobei ein erstes Teilsystem, ein zweites Teilsystem, ein drittes Teilsystem und Ausgabemittel für den Prozess in einem Kommunikations-Netzwerk derart betrieben werden, dass Kommunikations-Pfade zwischen ihnen zum Austausch von Daten genutzt werden, wobei das erste Teilsystem mit einem ersten Steuerprogramm mit einem ersten Programmzyklus zyklusorientiert erste Ausgangsdaten über ein PeripherieProtokoll an die Ausgabemittel weiterleitet, wobei dafür eine aktive erste Applikationsbeziehung zwischen dem ersten Teilsystem und den Ausgabemitteln eingerichtet wird, wobei parallel zum ersten Teilsystem das zweite Teilsystem mit einem Steuerprogramm mit einem zweiten Programmzyklus zweite Ausgangsdaten bzw. das dritte Teilsystem mit einem dritten Steuerprogramm mit einem dritten Programmzyklus dritte Ausgangsdaten in Bereitschaft zur Übernahme der Steuerung des technischen Prozesses berechnet, wobei weiterhin zwischen dem zweiten Teilsystem und den Ausgabemitteln eine passive zweite Applikationsbeziehung und zwischen dem dritten Teilsystem und den Ausgabemitteln eine passive dritte Applikationsbeziehung eingerichtet wird, wobei die drei Teilsysteme derart betrieben werden, dass sie einander Kenntnis über ihre berechneten Ausgangsdaten haben.

In der Automatisierungstechnik werden verstärkt, hochverfügbare Lösungen (H-Systeme) gefordert, welche geeignet sind, eventuell auftretende Stillstandszeiten der Anlage oder des Prozesses auf ein Minimum zu reduzieren. Eine Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformationen oder Ausgabedaten für diese Peripherieeinheiten nur von einem der beiden Teilsysteme durchgeführt werden, welches auch als Master arbeitet bzw. eine Masterfunktion übernommen hat. Damit beide Teilsysteme synchron ablaufen können, werden diese in der Regel über Synchronisationsverbindungen in regelmäßigen Abständen synchronisiert. Bezüglich einer Häufigkeit der Synchronisation und deren Umfang können verschiedene Ausprägungen unterschieden werden, z.B. ein Warm-Standby, oder ein Hot-Standby.

Von einem H-System in der Automatisierungstechnik wird ein stoßfreies "Failover" gefordert, falls eines der Teilsysteme ausfällt und ein anderes Teilsystem übernehmen muss. Dies bedeutet, dass in einem Störfall, trotz dieser Umschaltung diese Übernahme von einem Teilsystem auf das andere Teilsystem, sich nicht störend auf den zu steuernden technischen Prozess bzw. auf die Prozesssteuerung auswirkt. Ein Sprung (Stoß) der Ausgangswerte an den Ausgängen des Prozesses aufgrund einer Umschaltung ist nicht erwünscht und sollte vermieden werden. Unter stoßfrei ist daher auch die Stetigkeit eines Kurvenverlaufs der Prozessausgangswerte zu verstehen.

Um dies zu erreichen, müssen die beiden Teilsysteme zum Zeitpunkt des Ausfalls den gleichen Systemzustand aufweisen. Dies wird durch ein geeignetes Synchronisationsverfahren sichergestellt.

In der EP 2 667 269 B1 wird ein Verfahren zum Betreiben eines mindestens zwei Teilsysteme aufweisenden Automatisierungssystem vorgestellt. Die Automatisierungssysteme sind jeweils mit einem Steuerungsprogramm versehen. Die Teilsysteme arbeiten mit einer "ereignissynchronen Verarbeitung", welches bedeutet, dass sowohl der Master als auch der Slave aufgrund eines Ereignisses gleiche Programmpfade des jeweiligen Steuerprogramms durchlaufen, wobei die Durchläufe zeitlich asynchron erfolgen.

Auch die EP 2 657 797 B1 offenbart ein ähnliches Verfahren, wobei nach Auftreten eines Ereignisses an einen bestimmten Zeitpunkt Unterbrechungsstellen an den Slave übermittelt werden.

Mit den genannten europäischen veröffentlichten Patentschriften ist nun bekannt, dass in der Automatisierungstechnik zur Steigerung der Verfügbarkeit sogenannte "1 von 2 Systeme" eingesetzt werden, hierbei werden in der Regel zwei meist identische Teilsysteme eine Steuerungsaufgabe übernehmen und entsprechend synchronisiert, redundant arbeiten. Beim Ausfall eines der beiden Teilsysteme kann das jeweils andere Teilsystem die Steuerungsaufgabe weiterhin bearbeiten, ohne einen Produktionsprozess zu unterbrechen. Entscheidend für die mit einem "1 von 2 System" erreichbare Verfügbarkeit ist auch ein sogenannter Diagnosedeckungsgrad (Diagnostic coverage DC). Um einen hohen DC-Wert zu erhalten, muss eine entsprechend aufwändige Selbstdiagnose-Funktionalität in den beiden Teilsystemen eines "1 von 2 Systems" implementiert werden. Diese zusätzliche Selbstdiagnose-Funktionalität kann umgangen werden, wenn man ein sogenanntes "2 von 3 System" einsetzt.

Ausgehend von dem bekannten Stand der Technik ist es eine Aufgabe der vorliegenden Erfindung, ein alternatives redundantes Automatisierungssystem bzw. Verfahren zum Betrieb eines Automatisierungssystems zu schaffen.

Die Aufgabe wird dadurch gelöst, dass das zweite Teilsystem eine zweite Ausgabequittung und das dritte Teilsystem eine dritte Ausgabequittung an das erste Teilsystem sendet, und das erste Teilsystem die ersten Ausgangsdaten erst an die Ausgabemittel weitergibt, wenn die zweite Ausgabequittung und die dritte Ausgabequittung im ersten Teilsystem eingetroffen sind, wobei weiterhin in jedem Teilsystem ein Vergleichsmittel zyklisch betrieben wird, welches die ersten, zweiten und dritten Ausgangsdaten miteinander vergleicht und die jeweiligen Vergleichsmittel derart betrieben werden, dass bei jedem Vergleich, bei dem als Ergebnis alle Ausgangsdaten gleich sind, keine weitere Aktion durchgeführt wird, und bei einem Vergleich, bei dem Abweichungen zwischen den Ausgangsdaten festgestellt werden, dasjenige Teilsystem mittels einer Mehrheitsentscheidung als gestört erkannt wird, bei dem die Abweichung der eigenen Ausgangsdaten zu den anderen Ausgangsdaten am größten ist, und aufgrund dieses Ergebnisses wird, für den Fall, dass das erste Teilsystem als gestört erkannt wurde, die zweite Applikationsbeziehung von dem passiven Zustand in einen aktiven Zustand überführt und entsprechend die erste Applikationsbeziehung von dem aktiven Zustand in einen passiven Zustand überführt und von nun an, werden die zweiten Ausgangsdaten über die Ausgabemittel für den Prozess bereitgestellt.

Mit dieser Vorgehensweise wird eine stoßfreie Umschaltung von den ersten Ausgangsdaten zu den zweiten Ausgangsdaten erreicht. Dadurch ist sichergestellt, dass im Umschaltfall, die zuletzt gültigen oder neueren Ausgangsdaten geschrieben werden. Die Ausgabequittungen für das Bereitstellen von Ausgangsdaten werden demnach sowohl von dem zweiten Teilsystem als auch von dem dritten Teilsystem zum ersten Teilsystem gesendet. Das erste Teilsystem führt eine tatsächliche Ausgabe von ersten Ausgangsdaten an den Prozess erst aus, wenn die Quittungen von beiden anderen Teilsystemen eingetroffen sind.

In einer weiteren optimierten Ausgestaltung des Verfahrens wird das redundante Automatisierungssystem derart betrieben, dass das zweite und das dritte Teilsystem dem ersten Teilsystem zeitlich nachlaufen und das erste Teilsystem über die Kommunikationspfade zeitlich asynchron den Austausch der Daten zu den anderen Teilsystemen durchführt, wobei aus dem ersten Teilsystem und dem zweiten Teilsystem ein erstes Nachlaufsystem und aus dem ersten Teilsystem und dem dritten Teilsystem ein zweites Nachlaufsystem gebildet wird, wobei Synchronisationsdaten für das erste Nachlaufsystem und das zweite Nachlaufsystem identisch sind und über eine Multicastbasierte Kommunikation von dem ersten Teilsystem ausgesendet werden.

Demnach synchronisieren sich die beiden nachlaufenden Teilsysteme asynchron, wobei das erste Teilsystem die Synchronisationsdaten an das zweite Teilsystem und das dritte Teilsystem schickt. Das hat den Vorteil, dass die Synchronisationsdaten für das erste Nachlaufsystem sowie die für das zweite Nachlaufsystem identisch sind und die Synchronisationsdaten können damit effizient über eine Multicast-basierte Kommunikation von dem ersten Teilsystem übertragen werden, welches wiederum die Bandbreite in den Kommunikationskanälen spart.

In einer weiter optimierten Ausgestaltung des Verfahrens sendet das zweite Teilsystem eine zweite Zyklus-Quittung und das dritte Teilsystem eine dritte Zyklus-Quittung an das erste Teilsystem, und im ersten Teilsystem wird ein nächster erneuter erster Programmzyklus erst gestartet, wenn alle Quittungen eingetroffen sind.

Eine Übertragung aller relevanten Informationen insbesondere der in Bezug auf die Kenntnis der Teilsysteme, dass sie einander über ihre berechneten Ausgangsdaten bescheid wissen, erfolgt zeitlich asynchron. Dadurch wird eine Verarbeitungsleistung des ersten Teilsystems von einer für eine Ereignissynchronisation zur Verfügung stehenden Kommunikationsbandbreite entkoppelt, was insbesondere im Hinblick auf ein zunehmendes Ungleichgewicht zwischen einer Steigerung einer Verarbeitungsleistung des Prozesses einerseits und einer Steigerung einer Kommunikationsleistung von Kommunikationsprozessen von Vorteil ist.

Als ein wesentlicher Vorteil bei der asynchronen Kommunikation zwischen dem ersten Teilsystem und dem zweiten und dritten Teilsystem wird angesehen, dass auch langsame Kommunikationsverbindungen für den Aufbau eines hochverfügbaren bzw. redundanten Automatisierungssystem genutzt werden können. Dies bedeutet, dass auch eine an sich im Hinblick auf eine Übertragungsbandbreite oder auf eine Antwortzeit (Latenz) schlechtere Kommunikationsverbindung auch als eine Kommunikationsverbindung vorgesehen werden kann, die auch von anderen Kommunikationsteilnehmern genutzt wird und damit den beiden Teilnehmern nicht exklusiv für Synchronisationszwecke zur Verfügung steht.

Weiterhin von Vorteil ist, wenn die Kommunikation der Teilsysteme über das Kommunikations-Netzwerk mittels OPC UA oder OPC UA TSN erfolgt.

Eine Kommunikation der Teilsysteme zu den Ausgabemitteln wird vorteilhafter Weise für ein Profinet-Netzwerk mit einem entsprechenden Peripherieprotokoll (Profinet Systemredundanz) konfiguriert.

Weiterhin ist ein herausragender Vorteil des Verfahrens, dass zumindest ein Teilsystem in einer IT-Infrastruktur als virtuelles Teilsystem in Form einer Dienstleistung bereitgestellt wird.

Noch vorteilhafter ist es, wenn alle drei Teilsysteme als virtuelle Teilsysteme ausgestaltet sind.

Das Bereitstellen einer Dienstleistung in einer IT-Infrastruktur wird als sogenanntes Cloud Computing bezeichnet, dieses beinhaltet in der Regel das Bereitstellen von Speicherplatz, Rechnerleistung und/oder Anwendungssoftware als Dienstleistung. Technischer formuliert umschreibt Cloud-Computing den Ansatz, IT-Infrastruktur über ein Rechnernetzwerk zur Verfügung zu stellen, ohne dass diese Infrastruktur bzw. die Hardware lokal vor Ort installiert sein muss.

Diese vorgeschlagene Kombination einer asynchronen Synchronisation und einer Architektur eines "2 von 3 Systems", bietet den Vorteil, dass auch über Netzwerke mit einer schlechten Latenz eine gute Systemperformance erreicht werden kann.

Als Vorteil wird angesehen, dass beispielsweise ein drittes Teilsystem oder eine dritte PLC/SPS kostengünstig in einer Cloud-Umgebung instanziiert werden kann. Dadurch ist die Realisierung von performanten, Cloud-basierten Automatisierungslösungen möglich, welche eine dem Automatisierungsumfeld angemessene Verfügbarkeit bieten.

Ein weiterer Vorteil der hier beschriebenen Lösung besteht darin, dass im laufenden Betrieb von einer "1 von 2" zu einer "2 von 3" Lösung gewechselt werden kann, um die Zuverlässigkeit für kritische Prozess-Schritte zu erhöhen.

Ein weiterer Verfahrensschritt sieht vor, dass für den Fall, dass von nun an das zweite Teilsystem die Ausgangsdaten über die aktive zweite Applikationsbeziehung an die Ausgabemittel weiterleitet nun das dritte Teilsystem die dritte Ausgabequittung und die dritte Zyklusquittung an das zweite Teilsystem sendet und das zweite Teilsystem die zweiten Ausgangsdaten erst an die Ausgabemittel weitergibt, wenn die dritte Ausgabequittung und die dritte Zyklusquittung beim zweiten Teilsystem eingetroffen sind.

Auch betrifft die Erfindung ein redundantes Automatisierungssystem zur Steuerung eines technischen Prozesses, umfassend ein erstes Teilsystem, ein zweites Teilsystem, ein drittes Teilsystem und Ausgabemittel, welche über ein Kommunikations-Netzwerk verbunden sind, wobei das erste Teilsystem ausgebildet ist, mit einem ersten Steuerprogramm mit einem ersten Programmzyklus zyklusorientiert erste Ausgangsdaten über eine aktive erste Applikationsbeziehung an die Ausgabemittel auszugeben, das zweite Teilsystem mit einem zweiten Steuerprogramm mit einem zweiten Programmzyklus ausgebildet ist, in Bereitschaft über eine zweite Applikationsbeziehung zweite Ausgangsdaten für die Ausgabemittel bereitzustellen, das dritte Teilsystem mit einem dritten Steuerprogramm mit einem dritten Programmzyklus ausgebildet ist, in Bereitschaft über eine dritte Applikationsbeziehung dritte Ausgangsdaten für die Ausgabemittel bereitzustellen, wobei weiterhin die drei Teilsysteme ausgestaltet sind, sich gegenseitig ihre berechneten Ausgangsdaten bereitzustellen.

Die eingangs genannte Aufgabe, ein verbessertes Automatisierungssystem zu den bisher bereits bekannten bereitzustellen, wird dadurch gelöst, dass das zweite Teilsystem ein zweites Quittungsausgabemittel aufweist, welches ausgestaltet ist, eine zweite Ausgabequittung zu senden und das dritte Teilsystem ein drittes Quittungsausgabemittel aufweist, welches ausgestaltet ist, eine dritte Ausgabequittung zu senden und das erste Teilsystem ein Freischaltmittel aufweist, welches ausgestaltet ist, die ersten Ausgangsdaten erst an die Ausgabemittel weiterzugeben, wenn die zweite Ausgabequittung und die dritte Ausgabequittung im ersten Teilsystem eingetroffen sind, und weiterhin weist jedes Teilsystem ein Vergleichsmittel auf, welches ausgestaltet ist, zyklisch die ersten, zweiten und dritten Ausgangsdaten miteinander zu vergleichen und für den Fall, dass bei einem Vergleich, bei dem als Ergebnis alle Ausgangsdaten gleich sind, keine weitere Aktion durchgeführt wird, und für den Fall, dass bei einem Vergleich, bei dem Abweichungen zwischen den Ausgangsdaten festgestellt werden, dasjenige Teilsystem mittels einer Mehrheitsentscheidung als gestört erkannt wird, bei dem die Abweichung der eigenen Ausgangsdaten zu den anderen Ausgangsdaten am größten ist, wobei dazu ein Abweichungserfassungsmittel vorhanden ist, wobei das erste Teilsystem weiterhin ausgestaltet ist, für den Fall, dass das erste Teilsystem als gestört erkannt wurde, die erste Applikationsbeziehung von dem aktiven Zustand in einen passiven Zustand zu überführen und das zweite Teilsystem ausgestaltet ist, die zweite Applikationsbeziehung von dem passiven Zustand in einen aktiven Zustand zu überführen, wodurch von nun an, die zweiten Ausgangsdaten über die Ausgabemittel für den Prozess bereitgestellt werden.

Eine weitere vorteilhafte Ausgestaltung des redundanten Automatisierungssystems sieht vor, dass aus dem ersten Teilsystem und dem zweiten Teilsystem ein erstes Nachlaufsystem gebildet ist, und dass aus dem ersten Teilsystem und dem dritten Teilsystem ein zweites Nachlaufsystem gebildet ist, wobei das erste Teilsystem derart ausgestaltet ist, dass es über eine Multicast-basierte Kommunikation Synchronisationsdaten für das erste Nachlaufsystem und das zweite Nachlaufsystem bereitstellt.

Eine Weiterbildung des Automatisierungssystems sieht vor, dass das zweite Quittungsausgabemittel zusätzlich ausgestaltet ist, eine zweite Zyklusquittung an das erste Teilsystem zu senden und das dritte Quittungsausgabemittel ausgestaltet ist, eine dritte Zyklusquittung an das erste Teilsystem zu senden und das erste Teilsystem ausgestaltet ist, einen erneuten ersten Programmzyklus erst zu starten, wenn alle Quittungen eingetroffen sind.

Mit besonderem Vorteil wird zumindest ein Teilsystem in einer IT-Infrastruktur als virtuelles Teilsystem in Form einer Dienstleistung angeordnet sein. Da in jüngster Vergangenheit zunehmend die Möglichkeit diskutiert wird, Steuerungsapplikationen in eine Cloud zu verlegen, wird hier auch für ein redundantes Automatisierungssystem eine Lösung präsentiert. Bei einer Cloud handelt es sich insbesondere um eine Infrastruktur, welche beispielsweise über das Internet verfügbar gemacht wird und welche in der Regel Speicherplatz, Rechenleistung und/oder Anwendungssoftware bereitstellt, ohne dass eine entsprechende Infrastruktur auf einen lokalen Rechner installiert und gespeichert sein muss. Bei einer Cloud wird die Hardware in der Regel nicht von dem Nutzer einer Anwendung bzw. Applikation selbst betrieben oder bereitgestellt.

Unter einer Cloud bzw. Cloud-Computing kann insbesondere die Bereitstellung von IT-Infrastruktur als Dienstleistung ggf. von einem entfernten Standort aus, zu verstehen sein. Eine Cloud kann über das Internet erreichbar sein, oder auch von einem Unternehmen als sogenannte private Cloud betrieben werden, bei welcher die IT-Infrastruktur über ein Netzwerk, z.B. ein Intranet des Unternehmens, erreichbar ist.

Mit der Erfindung ist es demnach möglich, zumindest ein Teilsystem in eine Cloud zu verlegen.

Die Zeichnung zeigt ein Ausführungsbeispiel der Erfindung, dabei zeigt die
- FIG 1: ein redundantes Automatisierungssystem, ausgestaltet in einer 2 von 3 Konfiguration,
- FIG 2: das aus FIG 1 bekannte Automatisierungssystem in einer detaillierten Darstellung bezogen auf die Teilsysteme,
- FIG 3: das Prinzip eines Vergleichsmittels,
- FIG 4: eine Tabelle zur Veranschaulichung der Ermittlung einer Abweichungshäufigkeit für ein bestimmtes Teilsystem,
- FIG 5: ein Blockschaltbild, wobei ein Teilsystem in einer Cloud angeordnet ist, und
- FIG 6: eine detailliertere Darstellung eines Teilsystems zur Erklärung des Freischaltemittels.

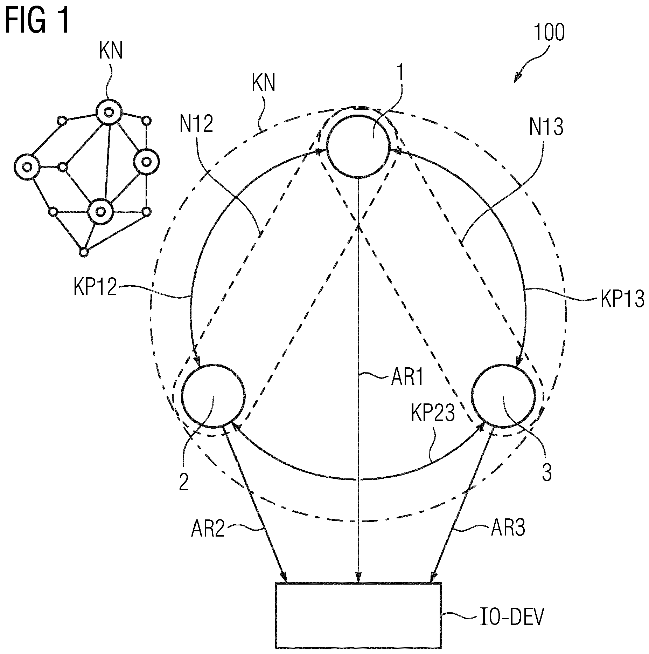

Gemäß FIG 1 ist ein redundantes Automatisierungssystem 100 zur Steuerung eines technischen Prozesses dargestellt. Das redundante Automatisierungssystem 100 umfasst ein erstes Teilsystem 1, ein zweites Teilsystem 2, ein drittes Teilsystem 3 und Ausgabemittel IO-Dev. Die genannten Teilsysteme 1,2,3 und das Ausgabemittel IO-Dev sind über ein Kommunikationsnetzwerk KN verbunden, seitlich dargestellt ist nochmal ein symbolisiertes Kommunikationsnetzwerk in einer Struktur, wie sie heute üblich ist, wie z.B. für das Internet. Mit Hilfe dieses Kommunikationsnetzwerkes KN können zwischen den Teilsystemen 1,2,3 Kommunikations-Pfade KP12, KP13, KP23 aufgespannt werden. Demnach existiert zwischen dem ersten Teilsystem 1 und dem zweiten Teilsystem 2 ein erster Kommunikations-Pfad KP12, zwischen dem ersten Teilsystem 2 und dem dritten Teilsystem 3 existiert ein zweiter Kommunikations-Pfad KP13 und zwischen dem zweiten Teilsystem 2 und dem dritten Teilsystem 3 existiert ein dritter Kommunikations-Pfad KP23.

Das erste Teilsystem 1 ist als ein Master ausgebildet und dementsprechend kann das erste Teilsystem 1 mit einem ersten Steuerprogramm P1 mit einem ersten Programmzyklus Z1 zyklusorientiert erste Ausgangsdaten A1 über eine aktive erste Applikationsbeziehung AR1 an die Ausgabemittel IO-Dev ausgeben.

Das zweite Teilsystem 2 ist mit einem zweiten Steuerprogramm P2 mit einem zweiten Programmzyklus Z2 ausgebildet und ist in Bereitschaft, nämlich in einer Slave-Funktion, über eine zweite Applikationsbeziehung AR2, zweite Ausgangsdaten A2 für die Ausgabemittel IO-Dev bereitzustellen.

Das dritte Teilsystem 3 ist mit einem dritten Steuerprogramm P3 mit einem dritten Programmzyklus Z3 ausgebildet und ebenfalls in Bereitschaft über eine dritte Applikationsbeziehung AR3, dritte Ausgangsdaten A3 für die Ausgabemittel IO-Dev bereitzustellen, wobei weiterhin die drei Teilsysteme 1,2,3 ausgestaltet sind, sich gegenseitig ihre berechneten Ausgangsdaten A1,A2,A3 über die Kommunikationspfade KP12, KP13, KP23 bereitzustellen.

Das zweite und das dritte Teilsystem 2,3 laufen dem ersten Teilsystem 1 zeitlich nach und das erste Teilsystem 1 tauscht über die Kommunikationspfade KP12, KP13 zeitlich asynchron die benötigten Daten mit, wobei aus dem ersten Teilsystem 1 und dem zweiten Teilsystem 2 ein erstes Nachlaufsystem N12 und aus dem ersten Teilsystem 1 und dem dritten Teilsystem 3 ein zweites Nachlaufsystem N13 gebildet wird, wobei die notwendigen Synchronisationsdaten für das erste Nachlaufsystem N12 und das zweite Nachlaufsystem N13 identisch sind und daher mit Vorteil über eine Multicastbasierte Kommunikation von dem ersten Teilsystem 1 zu den anderen Teilsystemen 2,3 nur einmal ausgesendet werden muss.

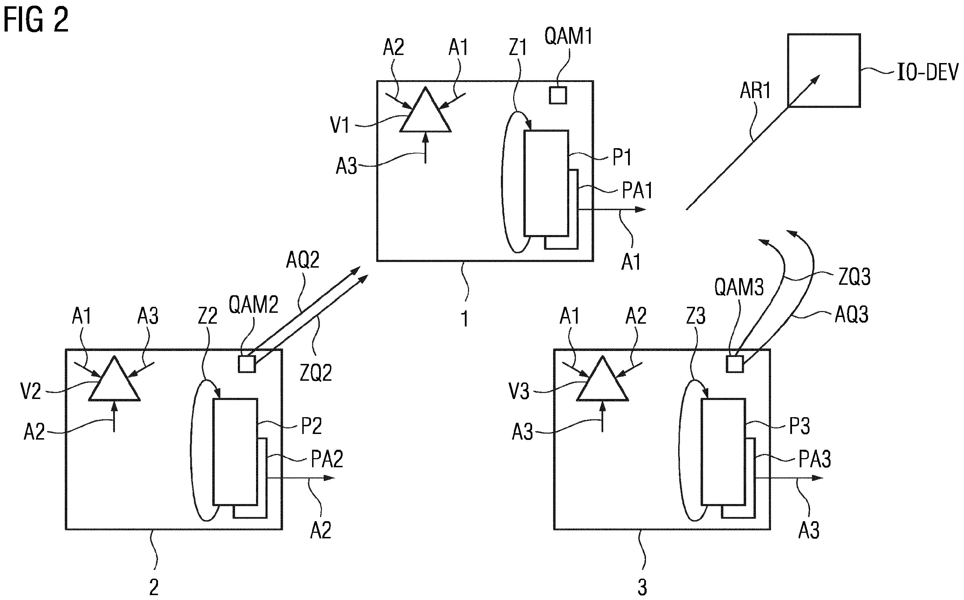

Mit der FIG 2 wird detaillierter auf die Ausgestaltung der Teilsysteme 1,2,3 eingegangen. Das erste Teilsystem 1 weist ein erstes Quittungsausgabemittel QAM1 auf, über dieses Quittungsausgabemittel QAM1 kann das erste Steuerprogramm P1 mit seinem ersten Programmzyklus Z1 Quittungen für andere Teilsysteme 2,3 bereitstellen, wenn z.B. der erste Programmzyklus Z1 vollständig durchlaufen ist oder die ersten Ausgangsdaten A1 vollständig bereitstehen. Das erste Steuerprogramm P1 schreibt in ein erstes Prozessabbild PA1 die ersten Ausgangsdaten A1 rein, wovon sie aus dem ersten Prozessabbild PA1 über eine erste Applikationsbeziehung AR1 zu einem Ausgabemittel IO-Dev gesendet werden können.

Da aber in der nun vorherrschenden Konfiguration des redundanten Automatisierungssystems 100 das erste Teilsystem 1 die führende Steuerungsrolle für den technischen Prozess hat, senden das zweite Teilsystem 2 und das dritte Teilsystem 3 jeweils ihre zweite Ausgabequittung AQ2 bzw. ihre dritte Ausgabequittung AQ3 über das zweite Quittungsausgabemittel QAM2 bzw. das dritte Quittungsausgabemittel QAM3 zum ersten Teilsystem 1.

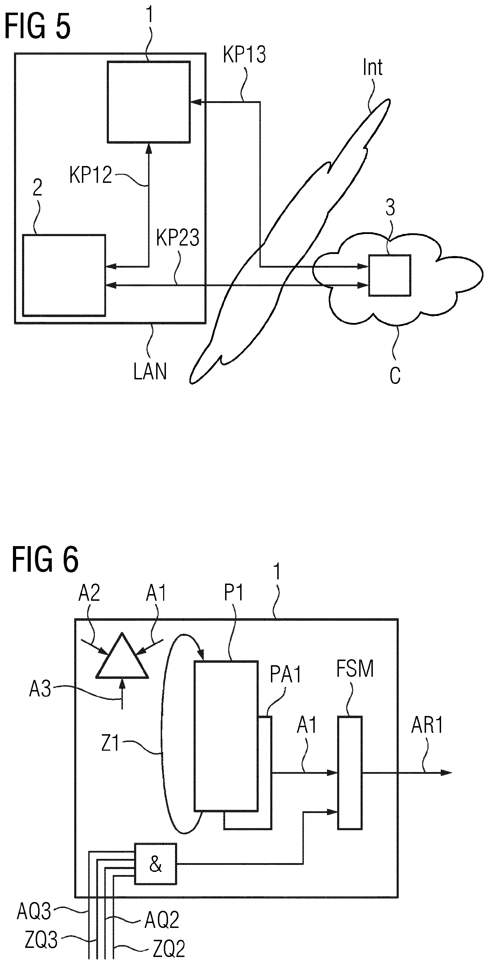

Mit FIG 6 gezeigt, verfügt das erste Teilsystem 1 über ein Freischaltmittel FSM, welches ausgestaltet ist, die ersten Ausgangsdaten A1 erst dann die Ausgabemittel IO-Dev weiterzugeben, wenn die zweite Ausgabequittung AQ2 und die dritte Ausgabequittung AQ3 im ersten Teilsystem 1 eingetroffen sind.

Um einen möglichen Störfall aufzudecken, weist jedes Teilsystem 1,2,3 gemäß FIG 2 ein Vergleichsmittel V1,V2,V3 auf, welches ausgestaltet ist, zyklisch die ersten, zweiten und dritten Ausgangsdaten A1,A2,A3 miteinander zu vergleichen und für den Fall, dass bei einem Vergleich, bei dem als Ergebnis alle Ausgangsdaten A1,A2,A3 gleich sind, keine weitere Aktion durchgeführt wird.

Aber für den Fall, dass bei einem Vergleich, bei dem Abweichungen zwischen den Ausgangsdaten A1,A2,A3 festgestellt werden, dasjenige Teilsystem 1,2,3 mittels einer Mehrheitsentscheidung ME als gestört erkannt wird, bei dem die Abweichung der eigenen Ausgangsdaten A1,A2,A3 zu den anderen Ausgangsdaten A1,A2,A3 am größten ist.

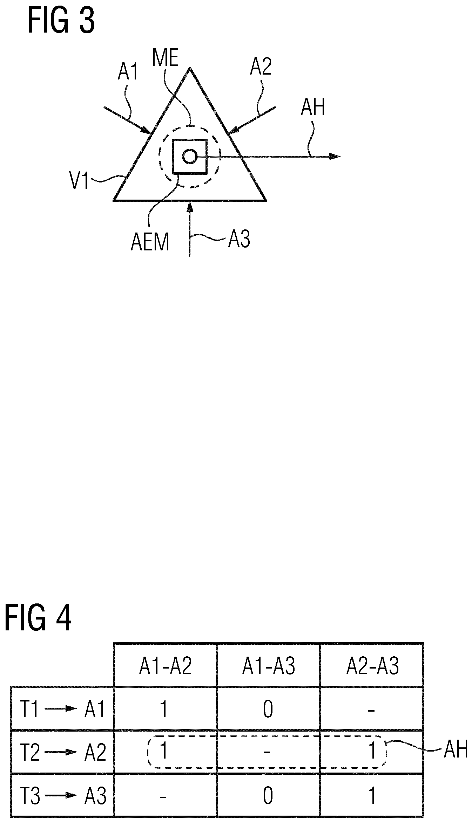

Dazu ist ein Abweichungserfassungsmittel AEM vorhanden, wie es in FIG 3 abgebildet ist. In dem ersten Vergleichsmittel V1 ist das Abweichungserfassungsmittel AEM angeordnet, welches mittels einer Mehrheitsentscheidung ME eine Abweichungshäufigkeit AH, bezogen auf ein Teilsystem 1,2,3, bereitstellt.

Mit der FIG 4 soll in einer Tabelle veranschaulicht werden, wie man die Mehrheitsentscheidung ME mittels einer Abweichungshäufigkeit AH ermittelt. In der ersten Spalte sind die Teilsysteme 1,2,3, wie sie ihre Ausgangsdaten A1,A2,A3 hervorrufen, dargestellt. Die zweite Spalte soll der Einfachheit halber normierte Ausgangsdaten A1,A2,A3 in ihrer Wertigkeit darstellen. Ab der dritten Spalte wird nun die Differenz zwischen den Ausgangsdaten A1,A2,A3 betragsmäßig dargestellt. Es werden demnach die Differenz zwischen den ersten Ausgangsdaten A1 und A2, die Differenz zwischen den ersten Ausgangsdaten A1 und den dritten Ausgangsdaten A3 und die Differenz zwischen den zweiten Ausgangsdaten A2 und den dritten Ausgangsdaten A3 betragsmäßig dargestellt. In der ersten Zeile T1 wird die Abweichung 1,0,- weil es für eine Abweichung zwischen den zweiten Ausgangsdaten A2 und den dritten Ausgangsdaten A3, bezogen auf die ersten Ausgangsdaten A1, keine gibt.

Die zweite Zeile T2 zeigt die Abweichung 1,-,1 an. Die dritte Zeile zeigt die Abweichung -,0,1 an. Damit ergibt sich in der zweiten Zeile für das zweite Teilsystem 2 eine Abweichungshäufigkeit AH, denn zweimal existiert eine Abweichung von 1, welches in Summe die Wertigkeit 2 ergibt. Damit wird aufgrund der Mehrheitsentscheidung ME festgestellt, dass das zweite Teilsystem 2 als gestört gelten muss. Jetzt würden Programmszenarien eintreten um das gestörte Teilsystem abzuschalten, zwar hat weiterhin das erste Teilsystem 1 die Masterfunktionalität, aber das zweite Teilsystem 2 wird derart weggeschaltet, dass es bei Ausfall des ersten Teilsystems 1 nicht als redundantes Teilsystem fungieren kann, jetzt könnte nur das dritte Teilsystem 3 als redundantes Teilsystem zum ausgefallenen ersten Teilsystem 1 fungieren.

Für den Fall, dass das erste Teilsystem 1 als gestört gilt, wäre die Abweichungshäufigkeit AH in der ersten Zeile T1 vom ersten Teilsystem 1 zu finden.

Mit der FIG 5 ist die Möglichkeit dargestellt, zumindest ein Teilsystem 1,2,3, nämlich das dritte Teilsystem 3, in einer IT-Infrastruktur als virtuelles Teilsystem in Form einer Dienstleistung anzuordnen. Die IT-Infrastruktur entspricht demnach einer Cloud C. Über ein Internet Int können die Kommunikationspfade KP13 bzw. KP23 nach wie vor zu den anderen Teilsystemen 1,2 aufgebaut werden. Das erste Teilsystem 1 und das zweite Teilsystem 2, befinden sich allerdings in einem Local Area Network Lan, wie es z.B. auf einem Fertigungsgelände einer industriellen Automatisierungsanlage existiert, der Vorteil ist, dass hier ein redundantes Automatisierungssystem 100 aufgebaut ist, bei welchem nicht zwangsläufig ein drittes physikalisches Teilsystem 3 auf dem Fertigungsgelände platziert sein muss, sondern als eine Backup-Lösung in einer Cloud C realisiert ist, welches ein Kostenvorteil bietet und demnach würde sich das dritte Teilsystem 3 nicht von dem zweiten Teilsystem 2 unterscheiden.

Gemäß FIG 6 wird noch einmal das Freischaltmittel FSM in Bezug auf die Quittungen dargestellt. Beispielsweise werden in dem ersten Teilsystem 1 die zweite Ausgabequittung AQ2, die dritte Ausgabequittung AQ3, die zweite Zyklusquittung ZQ2 und die dritte Zyklusquittung ZQ3 über eine Und-Verknüpfung zusammengeschaltet und an das Freischaltmittel FSM als ein Gültigkeitssignal weitergeleitet, die von dem ersten Prozessabbild PA1 des ersten Teilsystems 1 bereitgestellten ersten Ausgangsdaten A1 können damit über die erste Applikationsbeziehung AR1, beispielsweise über ein Profinet, zu den Ausgabemittel IO-Dev gesendet werden.

## Patentansprüche

1. Verfahren zum Betreiben eines redundanten Automatisierungssystems (100) zur Steuerung eines technischen Prozesses, wobei ein erstes Teilsystem (1), ein zweites Teilsystem (2), ein drittes Teilsystem (3) und Ausgabemittel (IO-Dev) für den Prozess in einem Kommunikations-Netzwerk (KN) derart betrieben werden, dass Kommunikations-Pfade (KP12,KP13,KP23) zwischen ihnen zum Austausch von Daten genutzt werden, wobei
- das erste Teilsystem (1) mit einem ersten Steuerprogramm (P1) mit einem ersten Programmzyklus (Z1) zyklusorientiert erste Ausgangsdaten (A1) über ein Peripherieprotokoll (PN) an die Ausgabemittel (IO-Dev) weiterleitet, wobei dafür eine aktive erste Applikationsbeziehung (AR1) zwischen dem ersten Teilsystem (1) und den Ausgabemitteln (IO-Dev) eingerichtet wird, wobei parallel zum ersten Teilsystem (1)
- das zweite Teilsystem (2) mit einem zweiten Steuerprogramm (P2) mit einem zweiten Programmzyklus (Z2) zweite Ausgangsdaten (A2) bzw. das dritte Teilsystem (3) mit einem dritten Steuerprogramm (P3) mit einem dritten Programmzyklus (Z3) dritte Ausgangsdaten (A3) in Bereitschaft zur Übernahme der Steuerung des technischen Prozesses berechnet, wobei weiterhin
- zwischen dem zweiten Teilsystem (2) und den Ausgabemitteln (IO-Dev) eine passive zweite Applikationsbeziehung (AR2) und zwischen dem dritten Teilsystem (3) und den Ausgabemitteln (IO-Dev) eine passive dritte Applikationsbeziehung (AR3) eingerichtet wird,
- wobei die drei Teilsysteme (1,2,3) derart betrieben werden, dass sie einander Kenntnis über ihre berechneten Ausgangsdaten (A1, A2, A3) haben,
**dadurch gekennzeichnet, dass**
- das zweite Teilsystem (2) eine zweite Ausgabequittung (AQ2) und das dritte Teilsystem (3) eine dritte Ausgabequittung (AQ3) an das erste Teilsystem (1) sendet,
- das erste Teilsystem (1) die ersten Ausgangsdaten (A1) erst an die Ausgabemitteln (IO-Dev) weitergibt, wenn die
- zweite Ausgabequittung (AQ2) und dritte Ausgabequittung (AQ3) im ersten Teilsystem (1) eingetroffen sind, und weiterhin wird,
- in jedem Teilsystem (1,2,3) ein Vergleichsmittel (V1,V2,V3) zyklisch betrieben, welches die ersten, zweiten und dritten Ausgangsdaten (A1,A2,A3) miteinander vergleicht und die jeweiligen Vergleichsmittel (V1,V2,V3) derart betrieben werden, dass
- bei jedem Vergleich, bei dem als Ergebnis alle Ausgangsdaten (A1, A2, A3) gleich sind, keine weitere Aktion durchgeführt wird, und
- bei einem Vergleich, bei dem Abweichungen zwischen den Ausgangsdaten festgestellt werden, dasjenige Teilsystem (1,2,3) mittels einer Mehrheitsentscheidung (ME) als gestört erkannt wird, bei dem die Abweichungen der eigenen Ausgangsdaten (A1,A2,A3) zu den anderen Ausgangsdaten (A1,A2,A3) am größten ist, und auf Grund dieses Ergebnisses wird,
- für den Fall, dass das erste Teilsystem (1) als gestört erkannt wurde, die zweite Applikationsbeziehung (AR2) von dem passiven Zustand in einen aktiven Zustand überführt und entsprechend die erste Applikationsbeziehung (AR1) von dem aktiven Zustand in einen passiven Zustand überführt und von nun an werden die zweiten Ausgangsdaten (A2) über die Ausgabemittel (IO-Device) für den Prozess bereitgestellt.

2. Verfahren nach Anspruch 1, wobei das zweite und das dritte Teilsystem (2,3) dem ersten Teilsystem (1) zeitlich nachlaufen und das erste Teilsystem (1) über die Kommunikationspfade (KP12,KP13) zeitlich asynchron den Austausch der Daten durchführt, wobei aus dem ersten Teilsystem (1) und dem zweiten Teilsystem (2) ein erstes Nachlaufsystem (N12) und aus dem ersten Teilsystem (1) und dem dritten Teilsystem (3) ein zweites Nachlaufsystem (N13) gebildet wird, wobei Synchronisationsdaten für das erste Nachlaufsystem (N12) und das zweite Nachlaufsystem (N13) identisch sind und über eine Multicastbasierte Kommunikation von dem ersten Teilsystem (1) ausgesendet werden.

3. Verfahren nach Anspruch 1 oder 2, wobei das zweite Teilsystem (2) eine zweite Zyklusquittung (ZQ2) und das dritte Teilsystem (3) eine dritte Zyklusquittung (ZQ3) an das erste Teilsystem (1) sendet, und im ersten Teilsystem (1) und ein nächster erneuter erster Programmzyklus(Z1) erst gestartet, wenn alle Quittungen eingetroffen sind.

4. Verfahren nach einem der Ansprüche 1 bis 3, wobei die Kommunikation der Teilsysteme (1,2,3) über das Kommunikations-Netzwerk (KN) mittels OPC UA oder OPC UA TSN erfolgt.

5. Verfahren nach einem Anspruch 1 bis 4, wobei die Kommunikation der Teilsysteme (1,2,3) zu dem Ausgabemittel (IO-Dev) für eines Profinet-Netzwerk mit dem entsprechenden Peripherieprotokoll (PN) konfiguriert wird.

6. Verfahren nach einem der Ansprüche 1 bis 5, wobei zumindest ein Teilsystem (1,2,3) in einer IT-Infrastruktur als virtuelles Teilsystem in Form einer Dienstleistung bereitgestellt wird.

7. Verfahren nach einem der Ansprüche 1 bis 6, wobei im Fall, dass das zweite Teilsystem (2) die Ausgangsdaten (IO-Dev) über die aktive zweite Applikationsbeziehung (AR2) an die Ausgabemittel (IO-Dev) weiterleitet nun das dritte Teilsystem (3) die dritte Ausgabequittung (AQ3) und die dritte Zyklusquittung (ZQ3) an das zweite Teilsystem (1) sendet und
- das zweite Teilsystem (2) die zweiten Ausgangsdaten (A2) erst an die Ausgabemittel (IO-Dev) weitergibt, wenn die dritte Ausgabequittung (AQ3) und die dritte Zyklusquittung (ZQ3) beim zweiten Teilsystem (2) eingetroffen sind.

8. Redundantes Automatisierungssystem(100) zur Steuerung eines technischen Prozesses, umfassend ein erstes Teilsystem (1), ein zweites Teilsystem (2), ein drittes Teilsystem (3) und Ausgabemittel (IO-Dev), welche über ein Kommunikations-Netzwerk (KN) verbunden sind, und Kommunikations-Pfade (KP12,KP13,KP23) zwischen den Teilsystemen (1,2,3) zum Austausch von Daten ausgebildet sind, wobei
- das erste Teilsystem (1) ausgebildet ist mit einem ersten Steuerprogramm (P1) mit einem ersten Programmzyklus (Z1) zyklusorientiert erste Ausgangsdaten (A1) über eine aktive erste Applikationsbeziehung (AR1) an die Ausgabemittel (IO-Dev) auszugeben,
- das zweite Teilsystem (2) mit einem zweiten Steuerprogramm (P2) mit einem zweiten Programmzyklus (Z2) ausgebildet ist in Bereitschaft über eine zweite Applikationsbeziehung (AR2) zweite Ausgangsdaten (A2) für die Ausgabemittel (IO-Dev) bereitzustellen,
- das dritte Teilsystem (3) mit einem dritten Steuerprogramm (P3) mit einem dritten Programmzyklus (Z3) ausgebildet ist in Bereitschaft über eine dritte Applikationsbeziehung (AR3) dritte Ausgangsdaten (A3) für die Ausgabemittel (IO-Dev) bereitzustellen, wobei weiterhin
- die drei Teilsysteme (1,2,3) ausgestaltet sind, sich gegenseitig ihre berechneten Ausgangsdaten (A1, A2, A3) bereitzustellen,
**dadurch gekennzeichnet, dass**
- das zweite Teilsystem (2) ein zweites Quittungsausgabemittel (QAM2) aufweist, welches ausgestaltet ist eine zweite Ausgabequittung (AQ2) zu senden und
- das dritte Teilsystem (3) ein drittes Quittungsausgabemittel (QAM3) aufweist, welches ausgestaltet ist, eine dritte Ausgabequittung (AQ3) zu senden und
- das erste Teilsystem (1) ein Freischaltmittel (FSM) aufweist, welches ausgestaltet ist, die ersten Ausgangsdaten (A1) erst an die Ausgabemittel (IO-Dev) weiterzugeben, wenn die
- zweite Ausgabequittung (AQ2) und die dritte Ausgabequittung (AQ3) im ersten Teilsystem (1) eingetroffen sind, und weiterhin
- weist jedes Teilsystem (1,2,3) ein Vergleichsmittel (V1,V2,V3) auf, welches ausgestaltet ist, zyklisch die ersten, zweiten und dritten Ausgangsdaten (A1,A2,A3) miteinander zu vergleichen und für den Fall, dass bei
- einem Vergleich, bei dem als Ergebnis alle Ausgangsdaten (A1, A2, A3) gleich sind, keine weitere Aktion durchgeführt wird, und für den Fall, dass
- bei einem Vergleich, bei dem Abweichungen zwischen den Ausgangsdaten festgestellt werden, dasjenige Teilsystem (1,2,3) mittels einer Mehrheitsentscheidung (ME) als gestört erkannt wird, bei dem die Abweichungen der eigenen Ausgangsdaten (A1,A2,A3) zu den anderen Ausgangsdaten (A1,A2,A3) am größten ist, wobei dazu ein Abweichungserfassungsmittel (AEM) vorhanden ist, wobei das
- erste Teilsystem weiterhin ausgestaltet ist für den Fall, dass das erste Teilsystem (1) als gestört erkannt wurde, die erste Applikationsbeziehung (AR1) von dem aktiven Zustand in einen passiven Zustand zu überführen und das
- zweite Teilsystem (2) ausgestaltet ist die zweite Applikationsbeziehung (AR2) von dem passiven Zustand in einen aktiven Zustand zu überführen, wodurch von nun an die zweiten Ausgangsdaten (A2) über die Ausgabemittel (IO-Device) für den Prozess bereitgestellt werden.

9. Redundantes Automatisierungssystem (100) nach Anspruch 8, wobei
- das zweite Quittungsausgabemittel (QAM2) ausgestaltet ist, eine zweite Zyklusquittung (ZQ2) an das erste Teilsystem (1) zu senden und
- das dritte Quittungsausgabemittel (QAM3) ausgestaltet ist, eine dritte Zyklusquittung (ZQ3) an das erste Teilsystem (1) zu senden und das erste Teilsystem (1) ausgestaltet ist, einen erneuten ersten Programmzyklus(Z1) erst zu starten, wenn alle Quittungen eingetroffen sind.

10. Redundantes Automatisierungssystem (100) nach Anspruch 8 oder 9, wobei zumindest ein Teilsystem (1,2,3) in einer IT-Infrastruktur als virtuelles Teilsystem in Form einer Dienstleistung angeordnet ist.
